# EUROPÄISCHE PATENTSCHRIFT

(11) **EP 0 670 651 B1**
(45) Veröffentlichungstag und Bekanntmachung des Hinweises auf die Patenterteilung: **03.07.2002**
(21) Anmeldenummer: 95102913.1
(22) Anmeldetag: 01.03.1995
(51) Int. Cl.: H04M 19/00

(54) **Schaltungsanordnung zur Gleichspannungsspeisung einer Fernsprechleitung**
Circuit arrangement for DC-feeding of a telephone line
Circuit pour alimenter une ligne téléphonique en tension continue

(30) Priorität: 04.03.1994 DE 4407280
(43) Veröffentlichungstag der Anmeldung: 06.09.1995
(73) Patentinhaber: Infineon Technologies AG, 81669 München (DE)
(72) Erfinder: Astegher, Berthold, Dipl. Ing., A-9020 Klagenfurt (AT); Gazsi, Lajos, Dr. Ing., D-40239 Düsseldorf (DE)
(74) Vertreter: Reinhard - Skuhra - Weise & Partner

(56) Entgegenhaltungen:
- EP-A- 0 446 944
- WO-A-93/21724
- PATENT ABSTRACTS OF JAPAN vol. 8, no. 194 (E-264) (1631) 6. September 1984 & JP-A-59 083 452 (FUJITSU KK) 14. Mai 1984

## Beschreibung

Die Erfindung betrifft eine Schaltungsanordnung zur Gleichspannungsspeisung einer Fernsprechleitung gemäß dem Oberbegriff des Anspruchs 1, wie aus der WO-A-93/21724 bekannt.

In Vermittlungseinrichtungen sind Einrichtungen vorgesehen, die für angeschlossene Teilnehmerleitungen vordefinierte Gleichspannungsarbeitspunkte einstellen. Hierzu ermittelt die Schaltungsanordnung den auf der Fernsprechleitung fließenden Strom und stellt entsprechend diesem die entsprechende Spannung ein.

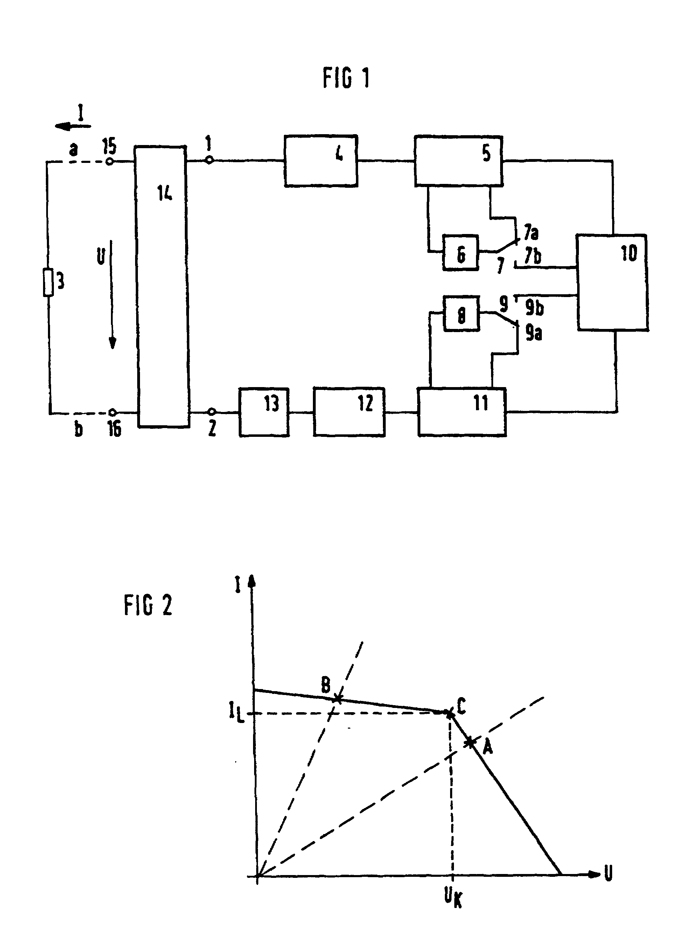

FIG 2 zeigt eine entsprechende Kennlinie (durchgezogene Linie) der Gleichspannungsarbeitspunkte, die für ein angeschlossenes nicht aktives Fernsprechgerät, d.h. ein Fernsprechgerät mit aufgelegtem Hörer darstellt. Der Bereich links des Knickpunktes C der Kennlinie gilt für Fernsprechgeräte, die nahe der Vermittlungseinrichtung angeschlossen sind. Der Teil rechts des Knickpunktes C der Kennlinie gilt für weiter entfernt anschlossene Fernsprechgeräte. Im Durchschnitt sind 80 % der an einer Vermittlungseinrichtung angeschlossenen Fernsprechgeräte im Nahbereich, d.h. links des Knickpunktes C, und 20 % in weiter entfernten Gebieten der Vermittlungseinrichtung angeschlossen.

Aufgabe der vorliegenden Erfindung ist es, eine Schaltungsanordnung zur Gleichspannungsspeisung einer Fernsprechleitung anzugeben, welche digital realisiert ist und ein schnelles Einschwingverhalten aufweist.

Diese Aufgabe wird durch den Gegenstand des Anspruchs 1 gelöst. Weiterbildungen sind in den abhängigen Ansprüchen angegeben.

Die Erfindung wird nachfolgend anhand von zwei Figuren näher erläutert. Es zeigen:
FIG 1 ein Blockschaltbild einer erfindungsgemäßen Schaltungsanordnung, und
FIG 2 eine Gleichspannungskennlinie für an einer Vermittlungseinrichtung angeschlossene Fernsprechgeräte.

Mit 15 und 16 sind Anschlußklemmen einer Vermittlungseinrichtung dargestellt, an die beispielsweise eine Fernsprechleitung (a, b), anschließbar ist. Mit 3 ist ein Gleichspannungsersatzwiderstand einer Fernsprecheinrichung, die über die Fernsprechleitung (a, b) an die Anschlußklemmen 15, 16 angeschlossen ist, dargestellt. Anschlußklemmen 15 und 16 führen zu einer Hochvolteinheit 14 zur Umsetzung in die leitungsseitige Hochspannung bzw. die vermittlungsseitige Niederspannung. Vermittlungsseitig ist die Hochvolteinheit 14 an Anschlußklemmen 1 und 2 angeschlossen.

Die Anschlußklemme 1 ist mit dem Eingang eines Analog-Digital-Wandlers 4 verschaltet. Der Ausgang des Analog-Digital-Wandlers 4 ist mit dem Eingang eines ersten digitalen Tiefpasses 5 verschaltet. Der digitale Tiefpaß 5 weist einen Ausgang auf, der mit dem Eingang eines Stromspannungswandlers 10 verschaltet ist. Der Ausgang des Stromspannungswandlers 10 ist mit dem Eingang eines zweiten Tiefpasses 11 verschaltet. Der Ausgang des Tiefpasses 11 ist mit dem Eingang eines Digital-Analog-Wandlers 12 verschaltet. Der Ausgang des Ditital-Analog-Wandlers 12 ist mit dem Eingang eines analogen Tiefpasses 13 verbunden, dessen Ausgang mit der Anschlußklemme 2 verschaltet ist.

Der erste digitale Tiefpaß 5 weist einen Rückkopplungszweig auf, in dessen Kreis ein Verzögerungsglied 6, das als Speicher der Tiefpaßkonstante dient, geschaltet ist. Ein Umschalter 7 ist vorgesehen, der dem Eingang des Verzögerungsglieds 6 wahlweise über einen ersten Umschaltkontakt 7a mit dem Rückkopplungsausgang des digitalen Tiefpaßfilters 5 bzw. über den Schaltkontakt 7b mit einem weiteren Ausgang des Stromspannungswandlers verschalten kann. Ebenso weist der weitere digitale Tiefpaß 11 einen Rückkopplungszweig auf, in dessen Kreis ein Verzögerungsglied 8 geschaltet ist. Ein weiterer Schalter 9 ist vorgesehen, durch den der Eingang des Verzögerungsglieds 8 wahlweise mit dem Rückkopplungsausgang über den Schaltkontakt 9a des Umschalters bzw. mit einem weiteren Ausgang des Stromspannungswandlers 10 über den Schaltkontakt 9b des Umschalters verbindbar ist.

An der Anschlußklemme 1 ist eine zum Strom I proportionale Größe abgreifbar und diese wird durch den AD-Wandler 4 digitalisiert. Ebenso gibt der DA-Wandler 12 eine Größe über Klemme 2 aus, die in der Hochvolteinheit 14 in eine dazu proportionale Spannung U gewandelt wird.

Üblicherweise weist der digitale Tiefpaß 5 eine Grenzfrequenz von 0,3 Hz auf und der digitale Tiefpaß 11 eine Grenzfrequenz von 20 Hz auf.

Im Normalbetrieb, d.h., wenn der Umschalter 7 mit dem Schaltkontakt 7a und der Umschalter 9 mit dem Schaltkontakt 9a verbunden wäre, hätte die Einrichtung im Stromzweig, d.h., von der Anschlußklemme 1 über den Analog-Digital-Wandler 4, den Tiefpaß 5 bis zum Stromspannungswandler 10 eine Einschwingzeit von ungefähr 3 Sekunden. Im Spannungszweig 11, 12, 13 wäre die Einschwingzeit gegenüber dem Stromzweig vernachlässigbar.

In FIG 2 ist die zugehörige Kennlinie dargestellt und zeigt verschiedene Arbeitspunkte A, B, C. A gilt z.B. für eine weit von der Vermittlungseinrichtung angeschlossene Fernsprecheinrichtung. B gilt dagegen für eine im Nahbereich angeschlossene Fernsprecheinrichtung. C stellt den Knickpunkt der Kennlinie dar. Der Schnittpunkt der Kennlinie mit der U-Achse stellt den Arbeitspunkt für eine nicht aktive Fernsprecheinrichtung dar.

Im zuvor beschriebenen Fall müßte der digitale Tiefpaß 5 ausgehend von einem Strom von 0 mA, im Fall eines gewünschten Arbeitspunkts B, die gesamte Kennlinie von rechts nach links durchlaufen bis der gewünschte Arbeitspunkt B erreicht wäre.

Durch die erfindungsgemäße Anordnung, d. h. durch die Umschaltbarkeit der digitalen Tiefpässe, kann der jeweilige Startwert eines Tiefpasses getrennt voneinander vorgegeben werden. Erfindungsgemäß wird als Startwert hierfür der Punkt C der in FIG 2 dargestellten Kennlinie gewählt. D.h. daß der digitale Tiefpaß 5 mit dem Wert I_{L} und der digitale Tiefpaß 11 mit dem Wert U_{K} vorgeladen wird. Die Kennlinie wird im I/U-Wandler 10 berechnet und die Werte für I_{L} und U_{K} werden von außen programmiert und stehen daher z.B. im I/U-Wandler 10 als Systemgrößen zur Verfügung. Erst danach wird der Umschalter in die Normalstellung zurückgeschaltet, d.h. Umschalter 7 auf den Umschaltkontakt 7a und Umschalter 9 auf den Umschaltkontakt 9a. Das Vorladen wird durch eine Abhebeerkennungsschaltung ausgelöst.

Nach dem Vorladen hat sich bereits ein Arbeitspunkt eingestellt, der einen Betrieb der Fernsprecheinrichtung gewährleistet.

Der analoge Tiefpaß 13 dient dazu, das vom Digital-Analog-Wandler 12 erzeugte Rauschen zu minimieren.

## Patentansprüche

1. Schaltungsanordnung zur Gleichspannungsspeisung einer Fernsprechleitung (a, b) mit:
- einer Einrichtung (14) zum Ausgeben einer Größe, die zum auf der Fernsprechleitung (a, b) fließenden Strom (I) proportional ist; und
- einer steuerbaren Spannungszuführungseinrichtung zum Zuführen einer Spannung (U) an die Fernsprechleitung (a, b) in Abhängigkeit von der Größe; und
- einer Einrichtung zur Verkürzung der Einschwingzeit;
- wobei eine erste Filtereinrichtung zum Filtern der Größe vorhanden ist; und
- wobei die Spannungszuführungseinrichtung eine zweite Filtereinrichtung zum Filtern der zugeführten Spannung (U) aufweist;
**dadurch gekennzeichnet,**
- **daß** ein A/D-Wandler (4) zum Digitalisieren des Wertes der Größe vorgesehen ist, der der ersten Filtereinrichtung vorgeschaltet ist;
- **daß** die erste Filtereinrichtung aus einem ersten digitalen Tiefpaß (5, 6) zum Filtern des digitalisierten Wertes der Größe besteht;
- **daß** die Spannungszuführungseinrichtung einen StromSpannungswandler (10) zum Empfangen des gefilterten digitalisierten Wertes der Größe und zum Ausgeben eines digitalisierten Wertes der Spannung (U) aufweist;
- **daß** die zweite Filtereinrichtung aus einem zweiten digitalen Tiefpaß (8, 11) zum Filtern des digitalisierten Wertes der Spannung (U) besteht; und
- **daß** die Einrichtung zur Verkürzung der Einschwingzeit eine Vorladeeinrichtung (7; 9) zum Vorladen von wenigstens einem der beiden digitalen Tiefpässe (5; 11) auf einen vorgebbaren Startwert (I_{L}; U_{K}) aufweist; und
- **daß** die Vorladeeinrichtung (7; 9) durch eine Abhebeerkennungsschaltung auslösbar ist.

2. Schaltungsanordnung nach Anspruch 1,
**dadurch gekennzeichnet,**
**daß** der vorgebbare Startwert (I_{L}; U_{K}) mit dem Knickpunkt der Gleichspannungskennlinie der Fernsprechleitung (a, b) übereinstimmt.

3. Schaltungsanordnung nach Anspruch 1,
**dadurch gekennzeichnet,**
**daß** dem D/A-Wandler (12) ein analoger Tiefpaß (13) nachgeschaltet ist.

## Claims

1. Circuit arrangement for DC voltage supply to a telephone line (a, b) having:
- a device (14) for emitting a variable which is proportional to the current (I) flowing in the telephone line (a, b); and
- a controllable voltage supply device for supplying a voltage (U) to the telephone line (a, b) as a function of the variable; and
- a device for shortening the transient recovery time;
- with a first filter device being provided in order to filter the variable; and
- with the voltage supply device having a second filter device for filtering the supplied voltage (U) ;
**characterized**
- **in that** an A/D converter (4) is provided for digitizing the value of the variable, and is connected upstream of the first filter device;
- **in that** the first filter device comprises a first digital low-pass filter (5, 6) for filtering the digitized value of the variable;
- **in that** the voltage supply device has a current/voltage converter (10) for receiving the filtered digitized value of the variable and for emitting a digitized value of the voltage (U);
- **in that** the second filter device comprises a second digital low-pass filter (8, 11) for filtering the digitized value of the voltage (U); and
- **in that** the device for shortening the transient recovery time has a precharging device (7; 9) for precharging at least one of the two digital low-pass filters (5; 11) to a start value of (I_{L}; Uₖ) which can be predetermined; and
- **in that** the precharging device (7; 9) can be triggered by a handset removal identification circuit.

2. The circuit arrangement according to Claim 1,
**characterized**
**in that** the start value (I_{L}; U_{K}) which can be predetermined matches the knee point in the DC voltage characteristic of the telephone line (a, b).

3. Circuit arrangement according to Claim 1,
**characterized**
**in that** an analogue low-pass filter (13) is connected downstream from the D/A converter (12).

## Revendications

1. Montage pour alimenter avec une tension continue une ligne téléphonique (a, b), comportant:
- un dispositif (14) pour délivrer une grandeur, qui est proportionnelle au courant (I) circulant dans la ligne téléphonique (a, b),
- un dispositif commandable d'amenée de la tension pour amener une tension (U) à la ligne téléphonique (a, b) en fonction de la grandeur; et
- un dispositif pour réduire la période transitoire;
- un premier dispositif formant filtre étant prévu pour filtrer la grandeur; et
- le dispositif d'amenée de tension possédant un second dispositif formant filtre pour filtrer la tension amenée (U) ;
**caractérisé en ce**
- **qu'**il est prévu un convertisseur analogique / numérique (4) pour numériser la valeur de la grandeur, qui est branché en amont du premier dispositif formant filtre;
- **que** le premier dispositif formant filtre est constitué par un premier filtre passe-bas (5, 6) servant à filtrer la valeur numérisée de la grandeur;
- **que** le dispositif d'amenée de tension comporte un convertisseur courant-tension (10) servant à recevoir la valeur numérisée et filtrée de la grandeur et à délivrer une valeur numérisée de la tension (U);
- **que** le second dispositif formant filtre est constitué par un second filtre passe-bas (8, 11) servant à filtrer la valeur numérisée de la tension (U); et
- **que** le dispositif de raccourcissement de la période transitoire comporte un dispositif de précharge (7; 9) pour précharger au moins l'un des deux filtres passe-bas numérique (5; 11) à une valeur de départ pouvant être prédéterminée (I_{L}, U_{K}) ; et
- **que** le dispositif de précharge (7; 9) peut être déclenché par un circuit d'identification d'écartement.

2. Montage selon la revendication 1, **caractérisé en ce que** la valeur de démarrage pouvant être prédéterminée (I_{L}; U_{K}) coïncide avec le coude de la courbe caractéristique de tension continue de la ligne téléphonique (a, b).

3. Montage selon la revendication 1, **caractérisé en ce qu'**un filtre passe-bas analogique (13) est branché en aval du convertisseur numérique / analogique (12).
